# EUROPÄISCHE PATENTSCHRIFT

(11) **EP 3 820 731 B1**
(45) Veröffentlichungstag und Bekanntmachung des Hinweises auf die Patenterteilung: **02.11.2022**
(21) Anmeldenummer: 19730748.1
(22) Anmeldetag: 12.06.2019
(51) Int. Cl.: B60L 53/16, B60L 53/35, H01R 13/62, H01R 13/629, H01R 13/703, B60L 53/34

(54) **LADEVORRICHTUNG ZUM LADEN EINER BATTERIE EINES ELEKTRISCH BETREIBBAREN KRAFTFAHRZEUGS**
CHARGING DEVICE FOR CHARGING A BATTERY OF AN ELECTRICALLY OPERATED MOTOR VEHICLE
DISPOSITIF DE CHARGE POUR CHARGER UNE BATTERIE D'UN VÉHICULE À MOTEUR À COMMANDE ÉLECTRIQUE

(30) Priorität: 11.07.2018 DE 102018211507
(43) Veröffentlichungstag der Anmeldung: 19.05.2021
(73) Patentinhaber: Bayerische Motoren Werke Aktiengesellschaft, 80809 München (DE)
(72) Erfinder: HOESS, Bernhard, 80995 Muenchen (DE); EWALD, Alexander, 85748 Garching (DE)
(86) Internationale Anmeldenummer: PCT/EP2019/065267
(87) Internationale Veröffentlichungsnummer: WO 2020/011469

(56) Entgegenhaltungen:
- KR-A- 20150 127 571
- US-A1- 2006 068 637
- US-A1- 2011 269 332
- US-A1- 2012 306 444
- US-A1- 2013 187 601

## Beschreibung

Die Erfindung betrifft eine Ladevorrichtung zum Laden einer Batterie eines elektrisch betreibbaren Kraftfahrzeugs gemäß dem Oberbegriff des unabhängigen Patentanspruchs.

Aus der US 2006/068637 A1 ist bereits eine Ladevorrichtung zum Laden einer Batterie eines elektrisch betreibbaren Kraftfahrzeugs bekannt. Die Ladevorrichtung umfasst ein Steckerelement, das mit einem korrespondierenden, fahrzeugseitigen Steckerelement des Kraftfahrzeugs verbindbar ist und über welches elektrische Energie zum Laden der Batterie auf das Kraftfahrzeug übertragbar ist. Die Ladevorrichtung weist einen mechanischen Überlastschutz auf.

Ferner ist aus der AT 516 728 B1 eine Ladevorrichtung für ein Fahrzeug bekannt, wobei eine an einem Fahrzeug befestigbare Kontaktierungsplatte mit einer Vielzahl von Positionierelementen ausgebildet ist und zumindest ein Verbindungselement zur Stromübertragung vorgesehen ist. Das Verbindungselement rastet bei einem Zusammenführen mit der Kontaktierungsplatte positionsunabhängig und nachgiebig in eines der Positionierelemente ein. Das Verbindungselement kann Teil einer Hebevorrichtung sein, welche an einem Boden eines Privatparkplatzes oder am Boden eines öffentlichen Bereiches zum Laden von Fahrzeugen angeordnet sein kann. Insbesondere ist die Hebevorrichtung als Roboterarm ausgebildet. Durch eine solche Anordnung der Kontaktierungsplatte am Fahrzeug zum einen und die Anordnung des Verbindungselements beziehungsweise der Hebevorrichtung zum anderen, ist ein einfaches und automatisiertes Verbinden des Verbindungselements mit der Kontaktierungsplatte beziehungsweise einem darauf angeordneten Positionierelement möglich.

Aufgabe der vorliegenden Erfindung ist es, eine Ladevorrichtung zum Laden einer Batterie eines elektrisch betreibbaren Kraftfahrzeugs zu schaffen, welche besonders gut vor Beschädigungen geschützt ist.

Diese Aufgabe wird erfindungsgemäß durch eine Ladevorrichtung zum Laden einer Batterie eines elektrisch betreibbaren Kraftfahrzeugs mit den Merkmalen des unabhängigen Patentanspruchs gelöst. Vorteilhafte Ausführungen der Erfindung sind Gegenstand der abhängigen Patentansprüche und der Beschreibung.

Die Erfindung betrifft eine Ladevorrichtung zum Laden einer Batterie eines elektrisch betreibbaren Kraftfahrzeugs, mit einem Steckerelement, welches mit einem korrespondierenden, fahrzeugseitigen Steckerelement des Kraftfahrzeugs verbindbar ist und über welches elektrische Energie zum Laden der Batterie auf das Kraftfahrzeug übertragbar ist. Hierfür kann das Steckerelement beispielsweise einen Stecker aufweisen, welcher mit einer Buchse des korrespondierenden, fahrzeugseitigen Steckerelements in Eingriff bringbar ist, um elektrische Energie von dem Stecker an die Buchse zu übertragen. Die Ladevorrichtung umfasst des Weiteren ein Grundelement, welches mit einer Stromquelle verbunden ist und welches elektrische Energie von der Stromquelle für das Steckerelement bereitstellt. Bei der Stromquelle kann es sich beispielsweise um ein Stromnetz handeln, welches das Grundelement mit elektrischer Energie versorgt. Über dies umfasst die Ladevorrichtung eine Verstelleinrichtung, mittels welcher das Steckerelement relativ zu dem Grundelement bewegbar ist, um das Steckerelement mit dem fahrzeugseitigen Steckerelement zu verbinden. Die Verstelleinrichtung stellt des Weiteren eine elektrische Verbindung zwischen dem Grundelement und dem Steckerelement bereit. Das bedeutet, dass mittels der Verstelleinrichtung das Steckerelement relativ zu dem Grundelement dreidimensional bewegbar ist, um das Steckerelement an das fahrzeugseitige Steckerelement heran zu führen und mit diesem zu verbinden. Insbesondere handelte es sich bei der Verstelleinrichtung um eine Robotereinrichtung, welche einenends an dem Grundelement befestigt ist und welche anderenends mit dem Steckerelement verbunden ist. Des Weiteren stellt die Verstelleinrichtung die elektrische Verbindung zwischen dem Grundelement und dem Steckerelement bereit, wobei über die elektrische Verbindung elektrische Energie von dem Grundelement an das Steckerelement übertragen wird.

Für einen besonders guten Schutz vor Beschädigungen ist erfindungsgemäß vorgesehen, dass die Verstelleinrichtung einen Überlastschutz aufweist, mittels welchem das Grundelement von dem Steckerelement bei Überschreiten einer vorgegebenen mechanischen Maximalbelastung der Verstelleinrichtung elektrisch zu trennen ist. die Überlastung der Verstelleinrichtung kann beispielsweise in Form von mechanischen Spannungen auftreten, insbesondere wenn das Kraftfahrzeug relativ zu dem Grundelement bewegt wird. Hierbei kann beispielsweise das mit dem fahrzeugseitigen Steckerelement verbundene Steckerelement der Ladevorrichtung mit dem Kraftfahrzeug mit bewegt werden, wobei das Grundelement starr mit einem Fahrzeuguntergrund verbunden ist. Hierdurch können mechanische Belastungen in der Verstelleinrichtung auftreten, welche zu einer Beschädigung der Verstelleinrichtung führen können. Um zu vermeiden, dass in Folge einer Beschädigung die elektrische Verbindung beschädigt wird, sodass spannungsführende Elemente der Verstelleinrichtung frei liegen, wird das Steckerelement von dem Grundelement elektrisch getrennt, sobald die vorgegebene mechanische Maximalbelastung überschritten ist. Als Überlastschutz kann gegebenenfalls zusätzlich das Grundelement von dem Steckerelement mechanisch getrennt werden um ein unkontrolliertes Brechen der Verstelleinrichtung zu vermeiden. Das kontrollierte elektrische Trennen des Steckerelements von dem Grundelement im Falle einer mechanischen Überlastung der Verstelleinrichtung ermöglicht, dass freiliegende, stromführende Elemente durch Beschädigung vermieden werden würden.

Die Verstelleinrichtung weist einen Hebearm zum Bewegen des Steckerelements relativ zu dem Grundelement auf, wobei an dem Hebearm als Überlastschutz wenigstens eine Solltrennstelle vorgesehen ist. An der Solltrennstelle ist der Hebearm zum Trennen des Steckerelements von dem Grundelement bei Überschreiten der vorgegebenen mechanischen Maximalbelastung mechanisch trennbar. Bei dem Hebearm kann es sich um einen Roboterarm handeln, mittels welchem das Steckerelement relativ zu dem Grundelement dreidimensional bewegbar ist. Dieser Hebearm weist wenigstens eine Solltrennstelle auf, an welcher der Hebearm bei mechanischer Überlastung kontrolliert getrennt wird, um das Steckerelement von dem Grundelement mechanisch zu trennen. Bei der wenigstens einen Solltrennstelle kann es sich beispielsweise um eine Sollbruchstelle handeln, an welcher der Hebearm bei der mechanischen Überlastung, und somit bei Überschreiten der mechanischen Maximalbelastung bricht. Durch das Brechen kann der Hebearm in wenigstens zwei Teile unterteilt werden, wobei eines der Teile mit dem Steckerelement verbunden ist und der andere Teil mit dem Grundelement verbunden ist. Alternativ kann der Hebearm die wenigstens eine Solltrennstelle an einer Anbindung mit dem Steckerelement und/oder an einer Anbindung mit dem Grundelement aufweisen, wodurch der Hebearm bei mechanischer Überlastung von dem Steckerelement und/oder von dem Grundelement durch Brechen abgetrennt wird. Die wenigstens eine Solltrennstelle kann alternativ oder zusätzlich eine Magneteinrichtung aufweisen, deren Magnetkraft der vorgegebenen mechanischen Maximalbelastung entspricht. Überschreitet eine mechanische Belastung des Hebearms die vorgegebene mechanische Maximalbelastung, so wird die Magnetkraft der Magneteinrichtung überwunden und der Hebearm unterteilt und/oder von dem Steckerelement und/oder dem Grundelement abgetrennt. Das Trennen der Verstelleinrichtung mittels der Magneteinrichtung hat insbesondere den Vorteil, dass die Verstelleinrichtung ohne Beschädigung mechanisch getrennt und später wieder mechanisch miteinander verbunden werden kann, ohne dass die Verstelleinrichtung beschädigt wird. Die Verbindung zwischen dem Steckerelement und dem Grundelement ist somit reversibel trennbar, sodass die Verstelleinrichtung vorteilhafterweise auch nach mechanischer Überbelastung mehrmals wiederverwendet werden kann.

Es hat sich als weiterhin vorteilhaft gezeigt, wenn die Verstelleinrichtung ein Ladekabel zum Übertragen von elektrischer Energie von dem Grundelement an das Steckerelement aufweist, wobei das Ladekabel als der Überlastschutz eine Steckverbindung umfasst, welche bei Überschreiten der vorgegebenen mechanischen Maximalbelastung das Ladekabel unterteilt und/oder das Ladekabel von dem Steckerelement und/oder dem Grundelement abtrennt. Das bedeutet, dass das Ladekabel die Steckverbindung aufweist, welche bei Überschreiten der vorgegebenen mechanischen Maximalbelastung sich auftrennt, um das Steckerelement von dem Grundelement elektrisch zu trennen. Hierbei gewährleistet das Steckerelement, dass bei einer mechanischen Trennung des Grundelements vom Steckerelement stromführende Elemente des Ladekabels nicht freiliegen, indem die Steckverbindung im getrennten Zustand eine Stromführung des Ladekabels unterbindet. Hierdurch kann das Ladekabel bei einer mechanischen Überbelastung besonders sicher elektrisch unterteilt werden. Insbesondere ist die Steckverbindung derart konzipiert, dass das Ladekabel lediglich dann elektrische Energie führt, wenn die Steckverbindung geschlossen ist. Insbesondere kann die Steckverbindung wenigstens eine mechanische Sicherheitseinrichtung umfassen, welche im unversteckten Zustand der Steckverbindung ein Freiliegen eines stromführenden Elements des Ladekabels unterbindet, indem das Sicherheitselement beispielsweise das jeweilige stromführende Element des Ladekabels im Bereich der Steckverbindung elektrisch abschirmt bei unversteckter Steckverbindung.

In diesem Zusammenhang hat es sich als vorteilhaft gezeigt, wenn die Steckverbindung eine erste Verbindungsfläche des Steckerelements und eine zweite Verbindungsfläche der Verstelleinrichtung umfasst, welche zum Befestigen des Steckerelements an der Verstelleinrichtung flächig miteinander verbindbar und über Magnetkraft aneinander zu halten sind. Das bedeutet, dass als Steckverbindung die Verstelleinrichtung und das Steckerelement über die Verbindungsflächen aneinander flächig mittels Magnetkraft gehalten sind. Über die Verbindungsflächen ist Strom beziehungsweise Spannung zwischen der Verstelleinrichtung und dem Steckerelement übertragbar. Beispielsweise kann zumindest eine der Verbindungsflächen magnetisch sein. Hierdurch kann ein Kraftschluss zwischen dem Steckerelement und der Verstelleinrichtung bereitgestellt werden. Wird infolge der mechanischen Belastung der Verstelleinrichtung die Magnetkraft überwunden, so wird das Steckerelement von der Verstelleinrichtung getrennt. Das flächige Anliegen des Steckerelements an der Verstelleinrichtung vermeidet eine Richtungssensitivität der Steckverbindung hinsichtlich einer Wirkungsrichtung der mechanischen Belastung.

In weiterer vorteilhafter Ausgestaltung der Erfindung ist vorgesehen, dass das Steckerelement mittels einer magnetischen Befestigung an der Verstelleinrichtung befestigt ist, wobei die magnetische Befestigung bei Überschreiten der vorgegebenen mechanischen Maximalbelastung das Steckerelement von der Verstelleinrichtung abtrennt. Hierbei wird mittels der magnetischen Befestigung bei Überschreiten der mechanischen Maximalbelastung das Steckerelement von der Verstelleinrichtung mechanisch und/oder elektrisch abgetrennt. Hierbei kann die mechanische Befestigung in einer Halteeinrichtung integriert sein, mittels welcher das Steckerelement an der Verstelleinrichtung und insbesondere an dem Hebearm befestigt ist. Hierdurch wird ermöglicht, dass das Steckerelement im Fall einer mechanischen Überbelastung besonders einfach und besonders schnell von der Verstelleinrichtung getrennt werden kann.

In einer weiteren Ausgestaltung der Erfindung hat es sich als vorteilhaft gezeigt, wenn die vorgegebene mechanische Maximalbelastung unterhalb einer zum Bruch führenden Bruchbelastung der Verstelleinrichtung liegt. Das bedeutet, dass das Steckerelement von dem Grundelement getrennt wird, bevor die Bruchbelastung der Verstelleinrichtung erreicht wird, sodass ein unkontrolliertes Brechen der Verstelleinrichtung zumindest im Wesentlichen vermieden werden kann. Hierdurch kann sichergestellt werden, dass das Steckerelement von dem Grundelement im Falle einer mechanischen Überbelastung kontrolliert mechanisch und/oder elektrisch getrennt wird. Ein unkontrolliertes Brechen der Verstelleinrichtung könnte beispielsweise zu einer Beschädigung des mittels der Ladevorrichtung zu ladenden Kraftfahrzeugs führen, was dadurch vermieden werden kann, dass die Verstelleinrichtung bereits vor Erreichen der Bruchbelastung, insbesondere bei Erreichen der vorgegebenen mechanischen Maximalbelastung, das Steckerelement vom Grundelement abtrennt. Die erfindungsgemäße Ladevorrichtung ermöglicht somit ein besonders sicheres Laden des Kraftfahrzeugs, wobei einer unkontrollierten Beschädigung der Verstelleinrichtung durch den erfindungsgemäßen Überlastschutz vorgebeugt werden kann.

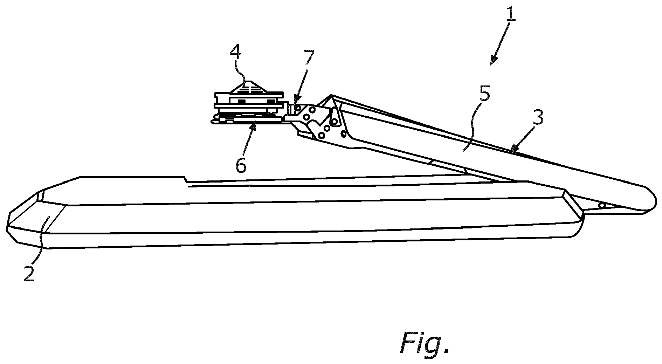

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnung näher erläutert.

Dabei zeigt die einzige Fig. eine schematische Seitenansicht einer Ladevorrichtung zum Laden einer Batterie eines elektrisch betreibbaren Kraftfahrzeugs mit einem Grundelement, an welchem über einen Roboterarm ein Steckerelement angeordnet ist, welches mit einem korrespondierenden, fahrzeugseitigen Steckerelement des Kraftfahrzeugs verbindbar ist, um die Batterie des Kraftfahrzeugs zu laden.

In der einzigen Fig. ist eine Ladevorrichtung 1 dargestellt. Mittels der Ladevorrichtung 1 ist elektrische Energie von einer Stromquelle, vorliegend einem Stromnetz, an ein Kraftfahrzeug übertragbar, um eine Batterie des insbesondere elektrisch betreibbaren Kraftfahrzeugs, insbesondere Kraftwagens, zu laden. Die Ladevorrichtung 1 umfasst ein Grundelement 2, eine mit dem Grundelement 2 verbundene Verstelleinrichtung 3 sowie ein Steckerelement 4, welches über die Verstelleinrichtung 3 mit dem Grundelement 2 verbunden ist. Das Grundelement 2 ist mit der Stromquelle verbunden und ist dazu eingerichtet, elektrische Energie von der Stromquelle zu empfangen. Über die Verstelleinrichtung 3, insbesondere ein Ladekabel der Verstelleinrichtung 3, ist die elektrische Energie von dem Grundelement 2 an das Steckerelement 4 übertragbar. Zusätzlich zu dem Ladekabel umfasst die Verstelleinrichtung 3 einen als Roboterarm ausgebildeten Hebearm 5, mittels welchem das Steckerelement 4 relativ zum Grundelement 2 bewegbar ist. Mittels des Hebearms 5 ist das Steckerelement 4 in wenigstens eine Nichtgebrauchsstellung und in wenigstens eine zu der Nichtgebrauchsstellung unterschiedliche Gebrauchsstellung verstellbar. In der Nichtgebrauchsstellung unterbleibt ein Übertragen von elektrischer Energie von dem Steckerelement 4 an das Kraftfahrzeug, wohingegen in der wenigstens einen Gebrauchsstellung mittels des Steckerelements 4 die von dem Grundelement 2 bereitgestellte elektrische Energie an das Kraftfahrzeug übertragen werden kann. Hierfür ist das Steckerelement 4 in dessen Gebrauchsstellung mit einem korrespondierenden, fahrzeugseitigen Steckerelement des Kraftfahrzeugs verbindbar, um die elektrische Energie zum Laden der Batterie auf das Kraftfahrzeug zu übertragen.

Die Verstelleinrichtung 3 ist dazu eingerichtet, eine jeweilige Relativposition des mittels der Ladevorrichtung 1 zu ladenden Kraftfahrzeugs relativ zu dem Grundelement 2 derart auszugleichen, dass das Kraftfahrzeug über das Steckerelement 4 mit elektrischer Energie von dem Grundelement 2 geladen werden kann. Für eine besonders hohe Sicherheit einer Ladeverbindung zwischen der Ladevorrichtung 1 und dem zu ladenden, elektrisch betreibbaren Kraftfahrzeug weist die Verstelleinrichtung 3 einen Überlastschutz auf, mittels welchem bei einem Überschreiten einer vorgegebenen mechanischen Maximalbelastung der Verstelleinrichtung 3 das Grundelement 2 von dem Steckerelement 4 elektrisch und mechanisch getrennt wird. Die vorgegebene mechanische Maximalbelastung, ab welcher das Steckerelement 4 von dem Grundelement 2 mechanisch und elektrisch getrennt wird, liegt vorliegend unterhalb einer zum unkontrollierten Bruch führenden Bruchbelastung der Verstelleinrichtung 3, sodass sichergestellt werden kann, dass auch bei einer mechanischen Überbelastung und somit einem Überschreiten der vorgegebenen mechanischen Maximalbelastung die Verstelleinrichtung 3 vor Beschädigung durch unkontrollierten Bruch geschützt ist.

Der Überlastschutz umfasst vorliegend eine magnetische Befestigung 6 des Steckerelements 4 an der Verstelleinrichtung 3. Bei Überschreiten einer Magnetkraft der magnetischen Befestigung 6 wird das Steckerelement 4 mechanisch von der Verstelleinrichtung 3 und somit von dem Grundelement 2 getrennt. Insbesondere entspricht die Magnetkraft der vorgegebenen mechanischen Maximalbelastung der Verstelleinrichtung 3.

Der Überlastschutz umfasst des Weiteren eine Steckverbindung 7 zwischen dem Steckerelement 4 und der Verstelleinrichtung 3. Insbesondere ist mittels der Steckverbindung 7 das Steckerelement 4 mit dem Ladekabel der Verstelleinrichtung 3 verbindbar. Ist das Ladekabel über die Steckverbindung 7 mit dem Steckerelement 4 verbunden, so wird elektrische Energie von dem Grundelement 2 an das Steckerelement 4 und von dem Steckerelement 4 an das Kraftfahrzeug übertragen. Wird infolge des Überschreitens der vorgegebenen mechanischen Maximalbelastung die Steckverbindung 7 getrennt, sodass das Steckerelement 4 elektrisch von dem Ladekabel der Verstelleinrichtung 3 getrennt ist, dann isoliert die Steckverbindung 7 strombeziehungsweise spannungsführende Elemente des Steckerelements 4 sowie des Ladekabels beziehungsweise der Verstelleinrichtung 3, um eine Freiligen der strombeziehungsweise spannungsführenden Elemente zu unterbinden. Der Überlastschutz ermöglicht somit, dass bei dem kontrollierten elektrischen Abtrennen des Steckerelements 4 von der Verstelleinrichtung 3 strom- beziehungsweise spannungsführende Elemente elektrisch isoliert werden, sodass die Ladevorrichtung 1 auch in ihrem getrennten Zustand besonders sicher ist. Alternativ zu der magnetischen Befestigung 6 des Steckerelements 4 an der Verstelleinrichtung 3 kann der Hebearm 5 wenigstens eine Magneteinrichtung aufweisen, welche eine mechanische Solltrennstelle für den Hebearm 5 bereitstellt.

Die Steckverbindung 7 kann als mechanisches Steckprinzip ausgeführt sein. Alternativ ist die Steckverbindung 7 magnetisch ausgeführt. Vorteil der magnetischen Ausführung ist, dass die stromführende beziehungsweise spannungsführende Verbindung zwischen dem Steckerelement 4 und dem Ladekabel der Verstelleinrichtung 3 über jeweilige flächige, stirnseitige Verbindungsflächen des Steckerelements 4 und der Verstelleinrichtung 3, insbesondere des Ladekabels, bereitgestellt werden kann. Die Verbindung zwischen dem Steckerelement 4 und der Verstelleinrichtung erfolgt somit bei der magnetischen Ausführung der Steckverbindung 7 nicht formschlüssig sondern kraftschlüssig, so dass eine Richtungssensitivität der Steckverbindung 7 hinsichtlich der Krafteinwirkung der mechanischen Überbelastung vermieden werden kann.

Der beschriebenen Ladevorrichtung 1 liegt die Erkenntnis zugrunde, dass bei elektrischen Fahrzeugen bisher ein Kabel für einen Ladevorgang manuell am Fahrzeug eingesteckt werden muss. Dieser Vorgang ist aber zeitaufwändig und wenig komfortabel für einen Nutzer. Die Ladevorrichtung 1 bietet eine Möglichkeit, das Kraftfahrzeug mit Hilfe eines vollständig automatisierten Systems, insbesondere der den Roboterarm aufweisenden Verstelleinrichtung 3 über das fahrzeugseitige Steckerelement, bei welchem es sich um eine Ladebuchse an einem Unterboden des Kraftfahrzeugs handeln kann, aufzuladen. die auf einem Boden unterhalb des Kraftfahrzeugs stehende Ladevorrichtung 1 kann hierzu eine Position der Ladebuchse am Unterboden des Kraftfahrzeugs erkennen und mit Hilfe des Roboterarms das Steckerelement 4 mit der Ladebuchse verbinden.

Die Ladevorrichtung 1 ermöglicht, dass das Kraftfahrzeug komplett automatisch mit dem Steckerelement 4 verbunden und hierdurch geladen werden kann. Während des Ladens sollte das Kraftfahrzeug nicht bewegt werden. Sollte sich das Kraftfahrzeug während des Ladevorgangs bewegen, wie durch äußere Krafteinwirkung, so könnten das Kraftfahrzeug und/oder die Ladevorrichtung 1 beschädigt werden. Insbesondere kann eine Beschädigung der Ladevorrichtung 1 und/oder eine Offenlegung beziehungsweise Durchtrennung von Hochvoltleitungen, insbesondere des Ladekabels, und anderen spannungsführenden Bauteilen der Ladevorrichtung 1 bei Losrollen oder Losfahren des mit der Ladevorrichtung 1 verbundenen Kraftfahrzeugs erfolgen. Um eine Beschädigung der Hochvoltleitung beziehungsweise des Ladekabels und anderer spannungsführender Bauteile der Ladevorrichtung 1 zu verhindern, kann der Hebearm 5 der Ladevorrichtung 1 um Trennstellen ergänzt werden, insbesondere um Solltrennstellen. Diese Solltrennstellen ermöglichen eine definierte Trennung des Steckerelements 4 vom Hebearm 5. Die jeweilige Solltrennstelle kann derart ausgelegt sein, dass sie sich unter einer bestimmten Belastung trennt. Alternativ oder zusätzlich kann das Hochvoltkabel an wenigstens einer Stelle durch die Steckverbindung 7 geteilt sein, welcher sich unter Belastung löst. Die Steckverbindung 7 kann sich sowohl im Ladekabel, als auch zwischen dem Ladekabel und dem Steckerelement 4, wie in der einzigen Fig. dargestellt, befinden. Eine für das Lösen der Steckverbindung 7 notwendige Belastung kann dabei deutlich unterhalb einer Belastung liegen, welche zu einer Beschädigung des Ladekabels führen würde. Zum Unterstützen der definierten Trennung der elektrischen Verbindung des Steckerelements 4 mit dem Ladekabel kann die magnetische Befestigung 6 des Steckerelements 4 am Hebearm 5 vorgesehen sein, um das Steckerelement 4 von der Verstelleinrichtung 3 kontrolliert mechanisch zu trennen. Alternativ oder zusätzlich kann eine klassische Sollbruchstelle beziehungsweise Solltrennstelle für eine mechanische Trennung des Steckerelements 4 von dem Hebearm 5 vorgesehen sein. Die vorliegend verwendete magnetische Befestigung 6 ist so ausgelegt, dass eine Trennung des Steckerelements 4 von dem Hebearm 5 bei einer Belastung erfolgt, welche unterhalb einer Bruchbelastung, welche zum Bruch des Hebearms 5 führen würde, liegt.

Ist die Steckverbindung 7 durch ein mit dem Steckerelement 4 verbundenes, losrollendes Kraftfahrzeug einer Belastung ausgesetzt, löst sich das Steckerelement 4 der Ladevorrichtung 1 kontrolliert von der Verstelleinrichtung 3, indem das Ladekabel an der Steckverbindung 7 von dem Steckerelement 4 getrennt wird. Hierdurch können offen liegende, spannungsführende Bauteile verhindert werden.

Solltrennstellen, wie die magnetische Befestigung 6 des Steckerelements 4 am Hebearm 5 haben den Vorteil, dass bei einem Losrollen oder Losfahren des mit dem Steckerelement 4 verbundenen Kraftfahrzeugs die Verstelleinrichtung 3 kontrolliert vom Steckerelement 4 getrennt werden kann. Die Steckverbindung 7 verhindert bei der Trennung offen liegende, spannungsführende Bauteile des Ladekabels beziehungsweise des Steckerelements 4. Hierdurch kann ein besonders sicheres Laden der Batterie des Kraftfahrzeugs mittels der Ladevorrichtung 1 umgesetzt werden.

### Bezugszeichenliste

- 1: Ladevorrichtung
- 2: Grundelement
- 3: Verstelleinrichtung
- 4: Steckerelement
- 5: Hebearm
- 6: magnetische Befestigung
- 7: Steckverbindung

## Patentansprüche

1. Ladevorrichtung (1) zum Laden einer Batterie eines elektrisch betreibbaren Kraftfahrzeugs mit
- einem Steckerelement (4), welches mit einem korrespondierenden, fahrzeugseitigen Steckerelement des Kraftfahrzeugs verbindbar ist und über welches elektrische Energie zum Laden der Batterie auf das Kraftfahrzeug übertragbar ist,
- einem Grundelement (2), welches mit einer Stromquelle verbunden ist und welches elektrische Energie von der Stromquelle für das Steckerelement (4) bereitstellt, und
- einer Verstelleinrichtung (3), mittels welcher das Steckerelement (4) relativ zu dem Grundelement (2) bewegbar ist, um das Steckerelement (4) mit dem fahrzeugseitigen Steckerelement zu verbinden, und mittels welcher eine elektrische Verbindung zwischen dem Grundelement (2) und dem Steckerelement (4) bereitgestellt ist,
- wobei die Verstelleinrichtung (3) einen Überlastschutz aufweist, mittels welchem das Grundelement (2) von dem Steckerelement (4) bei Überschreiten einer vorgegebenen mechanischen Maximalbelastung der Verstelleinrichtung (3) elektrisch zu trennen ist,
**dadurch gekennzeichnet, dass** die Verstelleinrichtung (3) einen Hebearm (5) zum Bewegen des Steckerelements (4) relativ zu dem Grundelement (2) aufweist, wobei an dem Hebearm (5) als der Überlastschutz wenigstens eine Solltrennstelle vorgesehen ist, an welcher der Hebearm (5) zum Trennen des Steckerelements (4) von dem Grundelement (2) bei Überschreiten der vorgegebenen mechanischen Maximalbelastung mechanisch trennbar ist.

2. Ladevorrichtung (1) nach Anspruch 1,
**dadurch gekennzeichnet, dass**
die Verstelleinrichtung (3) ein Ladekabel zum Übertragen von elektrischer Energie von dem Grundelement (2) an das Steckerelement (4) aufweist, wobei das Ladekabel als der Überlastschutz eine Steckverbindung (7) umfasst, welche bei Überschreiten der vorgegebenen mechanischen Maximalbelastung das Ladekabel unterteilt und/oder das Ladekabel von dem Steckerelement (4) und/oder dem Grundelement (2) abtrennt.

3. Ladevorrichtung (1) nach Anspruch 2,
**dadurch gekennzeichnet, dass**
die Steckverbindung (7) eine erste Verbindungsfläche des Steckerelements (4) und eine zweite Verbindungsfläche der Verstelleinrichtung (3) umfasst, welche zum Befestigen des Steckerelements (4) an der Verstelleinrichtung (3) flächig miteinander verbindbar und über Magnetkraft aneinander zu halten sind.

4. Ladevorrichtung (1) nach einem der vorhergehenden Ansprüche,
**dadurch gekennzeichnet, dass**
das Steckerelement (4) mittels einer magnetischen Befestigung (6) an der Verstelleinrichtung (3) befestigt ist, wobei die magnetische Befestigung (6) bei Überschreiten der vorgegebenen mechanischen Maximalbelastung das Steckerelement (4) von der Verstelleinrichtung (3) abtrennt.

5. Ladevorrichtung (1) nach einem der vorhergehenden Ansprüche,
**dadurch gekennzeichnet, dass**
die vorgegebene mechanische Maximalbelastung unterhalb einer zum Bruch führenden Bruchbelastung der Verstelleinrichtung (3) liegt.

## Claims

1. Charging apparatus (1) for charging a battery of an electrically operable motor vehicle, comprising
- a plug element (4) that can be connected to a corresponding, vehicle-side plug element of the motor vehicle and by means of which electrical energy can be transferred to the motor vehicle so as to charge the battery,
- a base element (2) that is connected to a current source and provides electrical energy from the current source for the plug element (4), and
- an adjusting facility (3) by means of which the plug element (4) can be moved relative to the base element (2) in order to connect the plug element (4) to the vehicle-side plug element, and by means of which an electrical connection is provided between the base element (2) and the plug element (4),
- wherein the adjusting facility (3) has an overload protection by means of which the base element (2) is to be electrically separated from the plug element (4) in the event of a predetermined mechanical maximal load of the adjusting facility (3) being exceeded,
**characterized in that** the adjusting facility (3) has a lifting arm (5) for moving the plug element (4) relative to the base element (2), wherein at least one desired separation site is provided as the overload protection on the lifting arm (5) and the lifting arm (5) can be mechanically separated at the desired separation site in order to separate the plug element (4) from the base element (2) in the event of the predetermined mechanical maximal load being exceeded.

2. Charging apparatus (1) according to Claim 1,
**characterized in that**
the adjusting facility (3) has a charging cable for transferring electrical energy from the base element (2) to the plug element (4), wherein the charging cable comprises as the overload protection a plug-in connection (7) that in the event of the predetermined mechanical maximal load being exceeded divides the charging cable into parts and/or separates the charging cable from the plug element (4) and/or from the base element (2).

3. Charging apparatus (1) according to Claim 2,
**characterized in that**
the plug-in connection (7) comprises a first connecting face of the plug element (4) and a second connecting face of the adjusting facility (3), which in order to attach the plug element (4) to the adjusting facility (3) can be connected to one another at their respective faces and are held against one another by way of a magnetic force.

4. Charging apparatus (1) according to one of the preceding claims,
**characterized in that**
the plug element (4) is attached to the adjusting facility (3) by means of a magnetic attachment (6), wherein the magnetic attachment (6) separates the plug element (4) from the adjusting facility (3) in the event of a predetermined mechanical maximal load.

5. Charging apparatus (1) according to one of the preceding claims,
**characterized in that**
the predetermined mechanical maximal load is below a breakaway load of the adjusting facility (3) that leads to the breakaway.

## Revendications

1. Dispositif de charge (1) pour charger une batterie d'un véhicule automobile à fonctionnement électrique, comprenant :
- un élément connecteur (4), qui peut être connecté à un élément connecteur correspondant côté véhicule du véhicule automobile et par le biais duquel de l'énergie électrique peut être transmise au véhicule automobile pour charger la batterie,
- un élément de base (2), qui est connecté à une source de courant et qui fournit de l'énergie électrique de la source de courant à l'élément connecteur (4), et
- un appareil de réglage (3), au moyen duquel l'élément connecteur (4) peut être déplacé par rapport à l'élément de base (2) afin de connecter l'élément connecteur (4) à l'élément connecteur côté véhicule, et au moyen duquel une connexion électrique est assurée entre l'élément de base (2) et l'élément connecteur (4),
- l'appareil de réglage (3) présentant une protection contre les surcharges, au moyen de laquelle l'élément de base (2) peut être séparé électriquement de l'élément connecteur (4) en cas de dépassement d'une sollicitation maximale prédéfinie de l'appareil de réglage (3), **caractérisé en ce que** l'appareil de réglage (3) présente un bras de levage (5) pour déplacer l'élément connecteur (4) par rapport à l'élément de base (2), au moins un point destiné à la rupture étant prévu sur le bras de levage (5) en tant que protection contre les surcharges, au niveau duquel le bras de levage (5) peut être séparé mécaniquement pour séparer l'élément connecteur (4) de l'élément de base (2) en cas de dépassement de la sollicitation maximale prédéfinie.

2. Dispositif de charge (1) selon la revendication 1,
**caractérisé en ce que**
l'appareil de réglage (3) présente un câble de charge pour la transmission d'énergie électrique de l'élément de base (2) à l'élément connecteur (4), le câble de charge comprenant, en tant que protection contre les surcharges, une connexion enfichable (7) qui, en cas de dépassement de la sollicitation maximale prédéfinie, divise le câble de charge et/ou sépare le câble de charge de l'élément connecteur (4) et/ou de l'élément de base (2).

3. Dispositif de charge (1) selon la revendication 2,
**caractérisé en ce que**
la connexion enfichable (7) comprend une première surface de connexion de l'élément connecteur (4) et une deuxième surface de connexion de l'appareil de réglage (3), qui peuvent être connectées à plat l'une à l'autre pour fixer l'élément connecteur (4) à l'appareil de réglage (3) et qui doivent être maintenues l'une contre l'autre par une force magnétique.

4. Dispositif de charge (1) selon l'une quelconque des revendications précédentes,
**caractérisé en ce que**
l'élément connecteur (4) est fixé à l'appareil de réglage (3) au moyen d'une fixation magnétique (6), la fixation magnétique (6) séparant l'élément connecteur (4) de l'appareil de réglage (3) en cas de dépassement de la sollicitation maximale prédéfinie.

5. Dispositif de charge (1) selon l'une quelconque des revendications précédentes,
**caractérisé en ce que**
la sollicitation maximale prédéfinie est inférieure à une sollicitation de rupture de l'appareil de réglage (3) conduisant à une rupture.
